(19) Europäisches Patentamt
European Patent Office
Office européen des brevets

(11) Publication number : 0 186 648 B2

# (12) NEW EUROPEAN PATENT SPECIFICATION

(45) Date of publication of the new patent specification : **02.09.92 Bulletin 92/36**

(51) Int. Cl.[5] : **C07F 9/38**, C25B 3/04

(21) Application number : **85870195.6**

(22) Date of filing : **23.12.85**

## (54) Process for the preparation of glyphosate and glyphosate derivatives.

(30) Priority : **28.12.84 US 687305**

(43) Date of publication of application : **02.07.86 Bulletin 86/27**

(45) Publication of the grant of the patent : **28.02.90 Bulletin 90/09**

(45) Mention of the opposition decision : **02.09.92 Bulletin 92/36**

(84) Designated Contracting States : **AT BE CH DE FR GB IT LI LU NL SE**

(56) References cited :
**FR-A- 2 294 181**
**US-A- 4 369 142**

(73) Proprietor : **Monsanto Company**
**Patent Department 800 North Lindbergh Boulevard**
**St. Louis Missouri 63167-7020 (US)**

(72) Inventor : **Rogers, Thomas Edward**
**409 Woodland Hill Court**
**Manchester Missouri 63011 (US)**
Inventor : **Smith, Lowell Richard**
**1750 Kimkirk Court**
**Kirkwood Missouri 63122 (US)**

(74) Representative : **Bosch, Henry et al**
**Monsanto Services International S.A. Patent Department, Avenue de Tervuren 270/272, Letter Box No. 21**
**B-1150 Brussels (BE)**

EP 0 186 648 B2

## Description

Background of the invention

This invention relates to the synthesis of secondary and tertiary amines containing phosphonyl and carbonyl groups and, more particularly to an improved process for producing N - phosphonomethylglycine or derivatives thereof by reductive alkylation.

N - Phosphonomethylglycine, known in the agricultural chemical art as glyphosate, is a highly effective and commercially important phytotoxicant useful in controlling the growth of germinating seeds, emerging seedlings, maturing and established woody and herbaceous vegetation and aquatic plants. Glyphosate and salts thereof are conveniently applied in an aqueous formulation as a post-emergent phytotoxicant or herbicide for the control of one or more monocotyledonous species and one or more dicotyledonous species. Moreover, such compounds are characterized by broad spectrum activity, i.e., they control the growth of a wide variety of plants, including but not limited to ferns conifers aquatic monocotyledons, and dicotyledons.

Hershman, U.S. Patent 3 969,398, describes a process for preparing glyphosate in which iminodiacetic acid is reacted with formaldehyde and phosphorus acid to produce N - phosphonomethyliminodiacetic acid as an intermediate. This is then oxidized to produce glyphosate.

Gaertner, Canadian Patent 1, 039, 739, describes a process for producing glyphosate by reacting aminomethylphosphonic acid and its esters with glyoxal or glyoxylic acid to form carbonylaldiminomethanephosphonates. Thereafter, the carbonylaldiminomethanephosphonates are subjected to catalytic hydrogenation to reduce the double bond and produce glyphosate acid or its esters. The ester groups are then hydrolyzed to produce N - phosphonomethylglycine. Both the condensation of aminomethylphosphonate with aldehyde and catalytic hydrogenation of the resultant imine are carried out in organic solvents. For the condensation reaction the solvent is an aromatic hydrocarbon, such as benzene, toluene, or xylene while catalytic hydrogenation is typically carried out in an alcohol.

Franz, U.S. Patent 3,799,758, describes the preparation of glyphosate by reaction of ethyl glycinate, formaldehyde, and diethyl phosphonate. Alternative processes described by Franz include phosphonomethylation of glycine with chloromethylphosphonic acid in the presence of sodium hydroxide and oxidation of N - phosphinomethylglycine with mercuric chloride.

Gaertner U.S. Patent 3,927, 080, describes the production of glyphosate by acid hydrolysis of N - t - butyl - N - phosphonomethylglycine or its esters. Tertiary butyl amine is reacted with a bromoacetate ester to produce an ester of N - t - butyl - glycine which is in turn reacted with formaldehyde and phosphorous acid to produce the N - t - butyl - N - phosphonomethylglycine precursor.

Ehrat, U.S. Patent 4,237, 065, describes a process in which N - phosphonomethylglycine is prepared starting from glycine formaldehyde, and a teritary base in an alcoholic solution. After completion of the reaction, a dialkyl phosphite is added and the reaction product is hydrolyzed and then acidified to precipitate the product.

While Gaertner, as described in this aforesaid Canadian patent, achieved monoalkylation of aminomethylphosphonic acid by the sequential process of first condensing aminomethylphosphonic acid or its esters with glyoxylic acid and its esters to produce the aldimine and thereafter subjecting the aldimine to catalytic hydrogenation, there are other references which describe the *in situ* reduction of the condensation products of various amines and aldehydes. Such condensation and *in situ* reduction is generally referred to in the art as reductive alkylation. However, when the aldimino structure obtained by condensation of a primary amine with an aldehyde is reduced *in situ*, the resultant secondary amine can further react with the aldehyde to produce an aminal which is in turn reduced by hydrogenolysis resulting in formation of a tertiary amine. Thus, the result is typically substantial dialkylation rather than the substantially exclusive monoalkylation that is preferred in the preparation of an end product, such as glyphosate.

Ikutani, "Studies of the N - Oxides of N,N - Dialkyl Amino Acids. II. The Syntheses of N,N - Dialkylglycine and Corresponding N - Oxides", *Bulletin of the Chemical Society of Japan, 42*, pp. 2330-2332, reports the reductive condensation of glycine with various aliphatic aldehydes. Only with relatively hindered aldehydes did Ikutani recover any monoalkylated product after reactions at 40°C to 50°C for periods of 3 to 9 hours. In the case of acetaldehyde propionaldehyde, and N - butyraldehyde, at best a trace of monoalkyl product was recovered while the dialkyl yields ranged from 41% to 83%.

Bowman "N-Substituted Amino Acids. part II. The Reductive Alkylation of Amino Acids", *Journal of the Chemical Society Part 2*, p. 1346, (1950) reported that experiments on the alkylation of glycine by means of acetaldehyde, propionaldehyde, N - butanal, and N - heptanal, under conditions favorable to the formation of monoalkyl derivatives failed to reveal any evidence of partial alkylation.

Moser U.S. Patent 4,369,142 describes a process for the preparation of N - phosphonomethylglycine in which aminomethylphosphonic acid is reacted in aqueous medium with glyoxal in the presence of sulfur dioxide.

In DE 2,725,669 there is disclosed a process for the preparation of secondary amines under hydrogenation conditions in the presence of a catalyst comprising nickel or cobalt and a quaternary ammonium compound. High yields are reported.

Mono-substituted amino acids, such as glycines and alanines, are prepared by a process disclosed in EPO 0 079 767 wherein a primary amino group and a ketone are reacted under reductive condensation conditions in the presence of a reductant and a hydrogenation catalyst under conditions of elevated temperature and superatmospheric conditions. Nobel metal catalysts are described and the preferred catalyst is palladium on carbon.

The present invention is directed to a process for preparing glyphosate and glyphosate derivatives corresponding to the Formula (I)

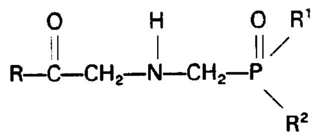

(I)

wherein R is -OH, $-OR^3$ wherein $R^3$ is selected from monovalent hydrocarbon groups containing 1 to 18 carbon atoms, and $-OR^4$ wherein $R^4$ is a herbicidally acceptable salt-forming cation selected from alkali metal cations, alkaline earth metal cations, ammonium, aliphatic ammonium and aliphatic phosphonium; and $R^1$ and $R^2$ are independently selected from -OH and $-OR^4$; the process comprising: condensing a precursor primary amine corresponding to the formula

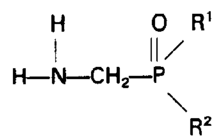

where $R^1$ and $R^2$ are as defined above, in an aqueous reaction medium with a carbonyl compound corresponding to the formula

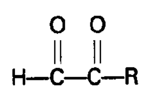

where R is as defined above; and reducing without isolation the condensation product to produce the secondary amine of Formula (I), wherein the condensation and reduction reactions are carried out at a temperature between about 0°C and about 150°C, and wherein the reduction is effected by catalytic hydrogenation, electrochemically or with a chemical, reducing agent other than sulfur dioxide.

The term monovalent hydrocarbon as used herein includes alkyl, alkenyl, alkynyl, aralkyl inclusive of both straight and branched chain radicals, such as methyl, ethyl, isopropyl, cyclopropyl, cyclohexyl, tertiary butyl, iso-butyl, n-butyl and the various forms amyl, hexyl, heptyl, octyl, nonyl, decyl, undecyl, dodecyl, tridecyl, tetradecyl, pentadecyl, hexadecyl, heptadecyl, octadecyl, benzyl, phenylethyl, naphthylethyl, tolylethyl, methylbenzyl, phenylbenzyl and the corresponding alkenyl, and alkynyl groups and the like, aryl groups and alkaryl groups, such as phenyl, tolyl, xylyl, naphthyl, vinylphenyl and the like. It is preferred that such monovalent hydrocarbon group contains from 1 to 18 carbon atoms and be alkyl alkenyl, or alkynyl groups.

Brief description of the drawings

- Fig. 1 is a plot of yield of monoalkylated product as a function of the pH of the reaction medium;
- Fig. 2 is a plot of selectivity of monoalkylated product vs. temperature of the reductive alkylation reaction;
- Fig. 3 is a schematic drawing illustrating a cell in which the process of the invention can be carried out via electrochemical reduction; and
- Fig. 4 is a schematic drawing illustrating an alternative cell for carrying out the process of the invention via electrochemical reduction.

Description of the preferred embodiments

In accordance with the present invention it has been discovered that glyphosate and various glyphosate derivatives can be produced with very high selectivity by the reductive alkylation of aminomethylphosphonic acid or its salts in an aqueous medium with a carbonyl compound, such as for example glyoxylic acid, a glyoxylate salt a glyoxylate ester or a glyoxylate polyacetal salt or ester. Normally the carbonyl compound is present in the aqueous medium as a hydrate. In the process of the invention, contrary to the results reported for the reductive alkylation of glycine with linear aldehydes such as acetaldehyde or butyraldehyde, high conversions of the reactants to the monoalkylated product can be achieved with relatively minimal dialkylation. Thus, not only high selectivity but also good overall yields are obtained. In the aqueous reaction medium, reduction of the intermediate reaction product can be carried out by catalytic hydrogenation, by electrochemical reduction or by non-catalytic chemical reduction, i.e. using a reducing agent effective without the necessity of a catalyst (for example, a hydride containing salt dissolved in the aqueous reaction medium).

The reaction proceeds through condensation of amine and carbonyl compound to form an aldimino intermediate followed by *in situ* reduction of the aldimino group to produce the final product.

Preferably, the pH of the aqueous solution containing the amine and carbonyl compound reactant is adjusted to between 4.0 and about 11.0, preferably 5.0 to 10.0, prior to carrying out the reductive alkylation. Fig. 1 illustrates the influence of pH on selectivity in the preparation of glyphosate (or its sodium salt or esters) by reaction of aminomethylphosphonic acid or its ester and glyoxylic acid or its ester.

Adjustment of pH is carried out by addition of a base typically an alkali metal hydroxide, such as sodium hydroxide or potassium hydroxide. Tertiary amines, such as triethylamine, may also be used. In a particularly advantageous embodiment of the invention, the pH is adjusted with a primary amine or secondary amine which carries through to provide the salt-forming cation for a glyphosate salt type reaction product.

After adjustment of pH, the aqueous solution is either contacted with hydrogen in the presence of a hydrogenation catalyst or placed in an electrochemical cell where the intermediate formed by the condensation reaction is cathodically reduced. Alternatively, the intermediate can be reduced using a chemical reducing agent that is effective without the necessity of a catalyst.

In the case of catalytic hydrogenation, a wide variety of hydrogenation catalysts may be used including various platinum group metals, such as platinum palladium, iridium osmium, rhodium, or ruthenium and various other transition metals such as nickel and cobalt. Other metals, such as copper and zinc can also be used. Either elemental metals or various compounds of such metals, such as oxides, halides, and organometallics can be used. Where the catalyst is a solid state material, it can be either supported, such as, for example, platinum on carbon, palladium on alumina, nickel on kieselguhr, etc., or unsupported, for example, Raney nickel or platinum oxide. Various soluble compounds of catalytic metals can also be employed. Palladium on carbon, nickel on kieselguhr, and Raney nickel are particularly effective and convenient catalysts and thus somewhat preferred. But depending on the conditions and nature of the substrate, a number of other catalysts may be equally effective or superior.

The preferred concentration of catalyst also varies widely depending on substrate and conditions. However, the optimum proportion for any particular system can be readily arrived at by routine testing.

Temperature is not generally a highly critical variable where the reductive alkylation of the invention is carried out by catalytic hydrogenation. Broadly, temperatures in the range of 0°C to 150°C may be used, although temperatures in the range of 20°C to 90°C are preferred. As illustrated in Fig. 2, selectivity may deteriorate at temperatures above 90°C. Pressure can also be varied widely with acceptable conversions and selectivity achieved at hydrogen pressures from atmospheric to $4.60 \times 10^8$ Newton/meter$^2$ (N/m$^2$) or higher.

In order to achieve high selectivity in monoalkylation of primary amines, it has not been found necessary to operate with any significant excess of the amine reactant. Substantially equimolar proportions can be used and, in fact a slight excess of carbonyl compound, for example, a carbonyl to amine molar ratio of 1.0 to 1.2, is generally preferred. The concentration of each reactant may vary over a wide range. For convenience, however, reactant concentrations ranging from 2% to 20% by weight are preferred.

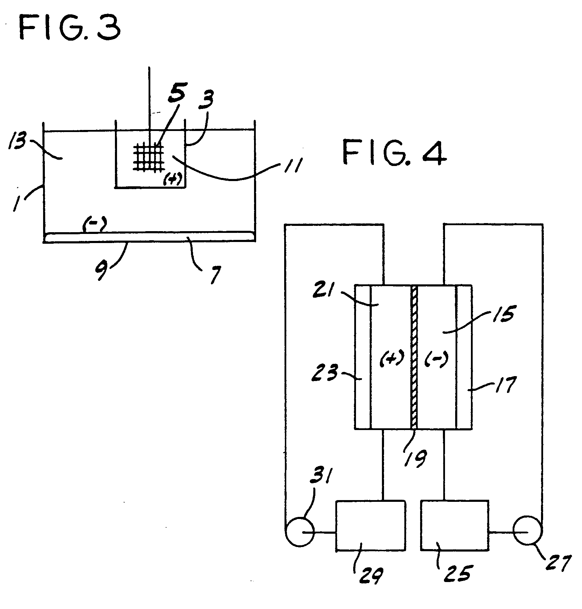

In the case of electrochemical reduction, concentrations of reactants, pH, and temperature are governed by essentially the same considerations discussed above. To carry out the electrochemical reductive alkylation, the solution of amine and carbonyl compound is placed in an electrolytic cell, preferably as the catholyte in a cell having a porous barrier between catholyte and anolyte chambers. Such a cell is illustrated, for example, in Fig. 3. This cell includes a container 1 having a porous alumina cup 3 disposed therein. Inside cup 3 is a platinum mesh anode 5. A mercury pool 7, covering the bottom wall 9 of container 1, serves as the cathode. Cup 3 thus divides the cell into anolyte chamber 11 and catholyte chamber 13, respectively. In operating this cell, any convenient electrolyte can be used for the anolyte. Current is applied preferably at a density of approximately 0.001 to 0.5 amps per square centimeter to effect the reduction.

Electrolytic reduction may also be carried out in an undivided cell whose construction may be essentially identical to that of Fig. 3 except that cup 3 is absent and no separate anolyte liquor is used.

Alternatively, electrochemical reduction can take place in a flow cell, such as that illustrated in Fig. 4. In this cell a catholyte flow channel 15 is disposed between a cathode 17 and a semi-permeable membrane 19 which comprises an ion exchange resin. Reaction solution contained in a reservoir 25 is continuously passed through catholyte channel 15 by means of a pump 27. On the opposite side of membrane 19 from channel 15 is an anolyte flow channel 21 and a carbon anode 23. Anolyte solution contained in a reservoir 29 is continuously passed through anolyte channel 21 by means of a pump 31.

The cathode of the electrochemical reduction cell is preferably comprised of a material which exhibits a high hydrogen overpotential in the electrochemical reduction system. Such include, for example, mercury, cadmium, and lead. Other cathode materials such as palladium platinum or graphite may be used.

Selection of the anode material is not particularly critical. Thus, for example, the anode may be of platinum, carbon, graphite, platinized titanium, stainless steel, etc.

In further alternative embodiment of the invention, the reductive alkylation can be carried out utilizing a chemical reducing agent that is effective for reducing the aldimine without the necessity of a catalyst. Conveniently, the chemical reducing agent is a condensed phase material, such as a salt, which may be dissolved in the aqueous reaction medium. Particularly preferred chemical reducing agents include the alkali metal borohydrides.

Product may be recovered from the reaction solution by various conventional methods. Where the reductive alkylation is conducted by catalytic hydrogenation using a solid state catalyst, the first step in product recovery is removal of the catalyst, as by filtration or centrifugation. The recovered catalyst may in most instances be recycled and reslurried with fresh feed solution containing amine and carbonyl compound reactants.

Once the reaction solution is clarified, reaction product may be separated for example, by evaporation. However, in the case of glyphosate or its salt, the product need not be recovered and the solution can be used directly as a herbicide.

The following examples illustrate the invention.

Example 1

Aminomethylphosphonic acid (2.22 g; 0.018 mole) and glyoxylic acid hydrate (1.91 g; 0.02 mole) were dissolved in water (approximately 25 mL). The pH of the resulting solution was adjusted to 6.0 by addition of 2.5 N sodium hydroxide, after which the volume of the solution was approximately 75 mL. This mixture was transferred to a 6 oz Fischer-Porter pressure reaction bottle. A Teflon-covered magnetic stirring bar was placed in the reactor and a 10% palladium on carbon catalyst (100 mg) was mixed with the solution contained in the reactor. Thereafter, the reactor was sealed, evacuated and purged with nitrogen. This evacuation procedure was repeated and the bottle was then pressurized with hydrogen to $3.34 \times 10^5$ $N/m^2$ gauge. The reaction was allowed to continue overnight, after which the solution was analyzed by nuclear magnetic resonance, spectroscopy, and high performance liquid chromatography (HPLC) for N - phosphonomethylglycine (sodium salt). The analysis showed that 2.77 g of this product had been produced representing a yield of 91.1 % based aminomethylphosphonic acid. The product was analyzed by proton nmr and had the following characteristics: $^1H$ nmr (20% aq. HCl, DSS, 60 MHz) a doublet (2H) centered at 3.54 $\delta$ ($J_{HCP}$=13 Hz); a singlet (2H) at 4.12 $\delta$.

Example 2

N - phosphonomethylglycine (glyphosate) was prepared using the apparatus and procedure described in Example 1 except that the initial hydrogen pressure was $6.89 \times 10^6$ $N/m^2$ gauge. After 2 hours at room temperature, N - phosphonomethylglycine (sodium salt) was obtained in 90.7% yield based aminomethylphosphonic acid.

Example 3

N - phosphonomethylglycine (glyphosate) was prepared using the apparatus and procedure described in Example 1 except that the catalyst loading was 0.20 g and the reaction was carried out at 50°C. After 5 hours, the conversion of aminomethylphosphonic acid was 74%, and the selectivity of conversion to N - phosphonomethylglycine (sodium salt) was 73%.

Example 4

Glyphosate was prepared from aminomethylphosphonic acid (10.63 g; 0.096 mole) and glyoxylic acid (9.09

g; 0.123 mole) in the manner generally described in Example 2. Catalyst loading was 1.0 g of 10% palladium on carbon. Total weight of the reaction mixture was 103.0 g. After 22 hours at room temperature, the yield of the sodium salt of glyphosate was 96.7%.

Example 5

Glyphosate was prepared in the manner described in Example 4 except that the catalyst employed was 60% to 62% nickel on kieselguhr (0.3 g) obtained from Aldrich Chemical Company. After 4 hours at room temperature, the conversion of aminomethylphosphonic acid was 62.6%, and the selectivity of conversion to the partial sodium salt of glyphosate was 97.6%.

Example 6

Glyphosate was prepared in the manner described in Example 2 except that the catalyst loading was 0.2 g of 10% palladium on carbon, and the pH was adjusted to 6.0 by dropwise addition of triethylamine rather than sodium hydroxide. After 5 hours of hydrogenation reaction at room temperature, the conversion of aminomethylphosphonic acid to N - phosphonomethylglycine (triethylamine salt) was 100%, and the selectivity of the reaction was 89%.

Example 7

Glyphosate was prepared in the manner described in Example 6 except that the catalyst utilized was 5% platinum on carbon (0.4 g) and the pH was adjusted to 6.2. After 21 hours of reaction, the conversion of aminomethylphosphonic acid was 35%, and the selectivity of the reaction was 82.4%.

Example 8

Glyphosate was prepared in the manner described in Example 2 except that 1.0 g of 10% palladium on carbon catalyst was used, and the pH was adjusted to 7.0 prior to hydrogenation. After 18 hours of reaction, an 86% yield of N - phosphonomethylglycine (partial sodium salt) was obtained.

Example 9

Glyphosate was prepared in the manner described in Example 2 except that 0.40 g of 10% palladium on carbon catalyst was used, and isopropylamine (one equiv.) was added to the aqueous solution of combined acids prior to pH adjustment. After reaction for 6 hours at room temperature, a 39.4% yield of the isopropylamine salt of N - phosphonomethylglycine was obtained.

Example 10

Glyphosate was prepared in the manner described in Example 2 except that the pH was adjusted to 7.0 prior to hydrogenation and a soluble rhodium catalyst corresponding to the formula

$$Rh[P(\phi\text{-}SO_3)\phi_2]_3$$

($1.26 \times 10^{-4}$ moles) was used for the hydrogenation. After 21 hours of reaction at room temperature, the reaction mixture was analyzed. This analysis revealed that a 35% conversion had been obtained with a selectivity to N - phosphonomethylglycine (sodium salt) of 84.8%.

Example 11

Reaction was carried out in the manner described in Example 10 except that the pH was adjusted to 6.0 and the initial hydrogen pressure was $3.45 \times 10^5$ $N/m^2$ gauge. After 43 hours the reaction was terminated and the reaction solution analyzed. A 43% yield of N - phosphonomethylglycine (sodium salt) was obtained.

Example 12

Reaction was carried out in the manner described in Example 2 except that the catalyst was platinum dioxide (0.5 g). A conversion of 90% was obtained and the selectivity to the sodium salt of N - phosphonomethylglycine was 92.4%.

Example 13

Reaction was carried out in the manner described in Example 2 except that no active catalyst was employed but, in lieu thereof, the reactor was charged with Norit® neutral carbon (1.5 g). After 24 hours no N - phosphonomethylglycine was detected.

Example 14

Aminomethylphosphonic acid was reductively alkylated by reaction with glyoxylic acid hydrate under catalytic hydrogenation conditions in the manner described in Example 2 except that the hydrogenation catalyst was ruthenium metal powder (0.5 g). After 21 hours of reaction, the product was analyzed. A 12% conversion of aminomethylphosphonic acid to glyphosate was achieved with a 27.4% selectivity.

Example 15

Aminomethylphosphonic acid was reductively alkylated with glyoxylic acid hydrate under the conditions described in Example 2 except that the catalyst consisted of iridium dioxide (0.5 g). At 27% conversion of aminomethylphosphonic acid, a 56% selectivity to glyphosate salt was observed.

Example 16

Aminomethylphosphonic acid was reductively alkylated with glyoxylic acid hydrate under catalytic hydrogenation conditions in the manner described in Example 1 except that the catalyst consisted of rhodium sesquioxide (0.5 g). At 63% conversion of aminomethylphosphonic acid, a 74% selectivity to glyphosate salt was observed.

Example 17

Glyphosate was produced in the manner described in Example 1 except that the catalyst utilized was platinum black (3.3 g). After 3 hours of reaction, a 7% conversion was achieved with a 63% selectivity to glyphosate salt.

Example 18

Glyphosate was produced in the manner described in Example 2 except that the catalyst utilized was Raney copper (1.3 g). After 14% conversion a 46% selectivity to the desired glyphosate product was seen.

Example 19

Glyphosate was produced in the manner described in Example 1 except that the catalyst used was Raney cobalt (1.4 g). At 50% conversion of aminomethylphosphonic acid, a 76% selectivity to glyphosate salt was observed.

Example 20

Aminomethylphosphonic acid was reductively alkylated with glyoxylic acid hydrate under catalytic hydrogenation conditions in the manner described in Example 2 except that the catalyst used was palladium metal (0.05 g), and the pH of the initial reaction mixture was 4.5. A 27% conversion of aminomethylphosphonic acid was obtained with a 93.7% selectivity to glyphosate.

Example 21

Glyphosate was produced in the manner described in Example 20 except that the initial pH was 6.0. A 30% conversion of aminomethylphosphonic acid and a 100% selectivity to glyphosate salt were observed.

Example 22

The reaction of Example 20 was repeated except that the initial pH was 3.5 and the catalyst was palladium

metal (0.5 g). After 38% conversion a 77% selectivity to glyphosate was observed.

Example 23

Glyphosate was produced in the manner described in Example 2 except that 1 equivalent of methyl glyoxylate (monomeric) was used in place of glyoxylic acid. After 16 hours of reaction, the hydrogen remaining in the reactor was vented and the catalyst removed by filtration. Concentrated hydrochloric acid (approximately 100 mL) was added to the reaction solution which was thereafter refluxed for 3 hours at atmospheric pressure. Analysis of the reaction solution indicated an 82.1% conversion of aminomethylphosphonic acid and an 84% selectivity to glyphosate.

Example 24

The reaction of Example 23 was repeated except that polymeric methyl glyoxylate was used in place of methyl glyoxylate monomer. Reaction was carried out at 85°C for 16 hours. The product was hydrolyzed with aqueous HCl. Analysis of the resulting reaction mixture revealed a 71 % conversion of aminomethylphosphonic acid with an 80% selectivity to glyphosate.

Example 25

The reaction of Example 2 was repeated except that the catalyst used was nickel on diatomaceous earth (0.5 g; -150 mesh; 90% nickel). The reaction was allowed to continue for 24 hours, at which time a 14.3% conversion to glyphosate salt was observed with 65% selectivity.

Example 26

The reaction of Example 2 was repeated except that the catalyst was cobalt powder (0.5 g; -325 mesh). After 20 hours of reaction, a 61 % selectivity to glyphosate salt was observed at 11 % conversion.

Example 27

The reaction of Example 26 was repeated except that the catalyst utilized was 1% palladium on graphite (0.5 g). A 27% conversion of aminomethylphosphonic acid was recorded with a 68% selectivity to glyphosate salt.

Example 28

Aminomethylphosphonic acid was reductively alkylated in the manner described in Example 26 except that the catalyst used was 0.5% palladium on alumina (0.5 g). A 13% conversion of aminomethylphosphonic acid was achieved with a selectivity to glyphosate salt of 35.3%.

Example 29

Glyphosate was produced by reductive alkylation of aminomethylphosphonic acid in the manner described in Example 26 except that the catalyst utilized was 0.5% platinum on alumina (0.5 g). A 66% selectivity was achieved at 15% conversion.

Example 30

The reaction of Example 26 was repeated except that the catalyst utilized was 10% nickel on graphite (0.5 g). A 30% conversion and 72% selectivity to glyphosate salt were observed.

Example 31

Aminomethylphosphonic acid was reductively alkylated in the manner described in Example 26 except that the catalyst was 1 % platinum on graphite (0.50 g). At 15% conversion 72% selectivity to glyphosate salt was seen.

Example 32

Glyphosate was produced in the manner described in Example 26 except that the catalyst used was osmium metal powder (0.1 g; -60 mesh). After 20 hours reaction at room temperature, 27% of the aminomethylphosphonic acid had been converted with a 69.0% selectivity to glyphosate salt.

Example 33

Reaction was carried out in the manner described in Example 26 except that the catalyst used was iridium metal powder (0.1 g; -60 mesh). An 8.2% conversion of aminomethylphosphonic acid with 23% selectivity to glyphosate salt was observed.

Example 34

Aminomethylphosphonic acid was reductively alkylated in the manner described in Example 26 except that the catalyst used was rhodium metal powder (0.1 g; -60 mesh). Analysis revealed a 20.2% conversion and 64% selectivity to the desired product.

Example 35

Glyphosate was produced in the manner described in Example 26 except that the catalyst used was zinc metal powder (0.1 g; 200 mesh). A 14% conversion to glyphosate and 39% selectivity were recorded.

Example 36

Glyphosate was produced in the manner described in Example 26 except that the catalyst used was ruthenium metal powder (0.1 g; -80 mesh). At 22% conversion of aminomethylphosphonic acid, a 45% selectivity to glyphosate salt was recorded.

Example 37

Reaction was carried out in the manner described in Example 26 except that the catalyst used was palladium oxide (0.1 g). At 58% conversion of aminomethylphosphonic acid, a 58% selectivity to glyphosate salt was obtained.

Example 38

Aminomethylphosphonic acid was reductively alkylated in the manner described in Example 2 except that the catalyst used was 10% palladium on carbon (0.05 g), and the pH was adjusted to 3.5 by addition of dilute aqueous sodium hydroxide. After 20 hours of reaction, the yield was 35%.

Example 39

Reaction was carried out in the manner described in Example 26 except that the hydrogenation catalyst used was 1 % ruthenium on graphite (0.05 g), and the temperature of the reaction was 40°C. A 29% yield of glyphosate salt was obtained.

Example 40

Aminomethylphosphonic acid and glyoxylic acid hydrate were reacted under catalytic hydrogenation conditions in the manner described in Example 2 except prior to introduction of hydrogen the pH was adjusted to 8.0. A 96% yield of glyphosate was obtained.

Example 41

Aminomethylphosphonic acid and glyoxylic acid hydrate were reacted under catalytic hydrogenation conditions in the manner described in Example 2 except that prior to introduction of hydrogen, the pH was adjusted to 9.0 by addition of dilute aqueous sodium hydroxide. A quantitative yield of glyphosate salt was

obtained.

Example 42

Aminomethylphosphonic acid was reductively alkylated with glyoxylic acid hydrate under the catalytic hydrogenation conditions described in Example 2 except that the pH was adjusted to 10 by addition of dilute sodium hydroxide. A 71% yield of glyphosate salt was obtained.

Example 43

Glyphosate was produced in the manner described in Example 2 except that the pH was adjusted to 12 by addition of 50% aqueous sodium hydroxide. A 56% yield of glyphosate salt was obtained.

Example 44

Glyphosate was produced in the manner described in Example 2 except that prior to catalytic hydrogenation, the pH was adjusted to 13 by addition of 50% aqueous sodium hydroxide. A 32% yield of glyphosate salt was obtained.

Example 45

Aminomethylphosphonic acid was reductively alkylated under catalytic hydrogenation conditions with glyoxylic acid hydrate in the manner described in Example 1 except that the in the run of this example, hydrgen was bubbled through the reaction mixture at atmospheric pressure for 48 hours. A 68% yield of glyphosate salt was obtained (94% conversion with 73% selectivity).

Example 46

The reaction of Example 2 was repeated except that the pH was 2.2. The yield of glyphosate salt was 4.4 %.

Example 47

Aminomethylphosphonic acid was reductively alkylated with glyoxylic acid under catalytic hydrogenation conditions as described in Example 25 except that the catalyst used was 1% rhodium on graphite (0.5g). A 32% yield of glyphosate salt was obtained.

Example 48

Aminomethylphosphonic acid (1.64 g; 0.015 mole) and glyoxylic acid (1.90 g; 0.02 mole) were dissolved in water (30 mL). The pH of the resulting solution was adjusted to 6.0 by addition of dilute aqueous sodium hydroxide. The solution was then transferred to an undivided electrochemical cell equipped with a 7.0 $cm^2$ mercury cathode and a platinum anode. Current was then passed through the cell at 100 milliamperes for a period of 3 hours and 15 minutes. A 35.0% current efficiency was observed in the conversion of starting materials to glyphosate salt.

Example 49

Glyphosate was prepared in the manner described in Example 2 except that the initial hydrogen pressure was 3.17x $10^7 N/m^2$ and the pH was 7.0. After 3 hours of reaction a 100% selectivity to glyphosate salt was achieved at a 73% conversion of aminomethylphosphonic acid.

Example 50

Glyphosate was produced in the manner described in Example 2 except that the pH was 7.0 and the reaction time was 1 hour. The yield of glyphosate salt was 85.1%.

Example 51

Aminomethylphosphonic acid was reductively alkylated with polymeric methyl glyoxylate under catalytic hydrogenation conditions as described in Example 24 except that the reaction was carried out at 70°C, and the pH was initially adjusted to 7.0. After completion of the catalytic hydrogenation step, the product was hydrolyzed by addition of aqueous hydrochloric acid. The resulting reaction mixture was found to contain 2.53 g of glyphosate reflecting a conversion of aminomethylphosphonic acid of 92.8% and a selectivity to glyphosate of 90.6%.

Example 52

Reaction was carried out in the manner described in Example 2 except that the pH was 8.0 and the reaction temperature was 40°C. After 3 hours the reaction was terminated and the reaction product analyzed. A 79.7% conversion of aminomethylphosphonic acid and a 96.6% selectivity to glyphosate salt were observed.

Example 53

Reaction was carried out in the manner described in Example 52 except that the aqueous solution of aminomethylphosphonic acid and glyoxylic acid hydrate was heated to 70°C under an argon atmosphere prior to pressurization with hydrogen, and the reaction was thereafter carried out at 70°C. After 3 hours the reaction was terminated and the reaction product analyzed. A 74.8% conversion of aminomethylphosphonic acid and a 97.1% selectivity to glyphosate salt were observed.

Example 54

The reaction was carried out in the manner described in Example 53 except that a reaction temperature of 120°C was utilized. After 3 hours the reaction was terminated and the reaction product analyzed. A 56.2% conversion of aminomethylphosphonate was obtained with a 49% selectivity to glyphosate.

Example 55

Reaction was carried out in the manner described in Example 52 except that the system was preheated to 90°C and the reaction was carried out at that temperature for 2 hours. An 84.7% conversion and an 88.1 % selectivity were found.

Example 56

The reaction was carried out in the manner described in Example 53 except that a reaction temperature of 150°C was maintained. After 3 hours 55.7% of the aminomethylphosphonate starting material had been converted with a 13.8% selectivity to glyphosate.

Set forth in Table I is a summary of data on the effect of temperature on selectivity for reductive alkylation of aminomethylphosphonic acid with methyl glyoxylate run at a pH of 8.0 and $6.89 \times 10^6$ $N/m^2$ gauge hydrogen pressure. A plot of this data is set forth in Fig. 2.

TABLE I

| Example No. | Temp. (°C) | Selectivity (%)* |
|---|---|---|
| 40 | 27 | 96 |
| 52 | 40 | 96.6 |
| 53 | 70 | 97.1 |
| 54 | 90 | 88.1 |
| 55 | 120 | 49 |
| 56 | 150 | 13.8 |

*Selectivity is defined as the ratio of the amount of glyphosate produced to the theoretical amount of glyphosate which could be produced based on the aminomethylphosphonic acid starting material converted.

Example 57

Aminomethylphosphonic acid was reductively alkylated with glyoxylic acid under the conditions described in Example 2 except that the catalyst comprised 1% palladium on carbon (0.10 g), and the pH was 8.0. After reaction for 5 hours at room temperature, the hydrogen was vented from the reactor and the reaction solution analyzed. A 40.0% conversion of aminomethylphosphonic acid starting material was observed with a selectivity to glyphosate of 100%.

Example 58

Aminomethylphosphonic acid was reductively alkylated with glyoxylic acid under the conditions described in Example 2 except that the catalyst was nickel on kieselguhr (0.10 g; 60 to 62% nickel), and the pH was 8.0. An 89.2% yield of glyphosate was obtained.

Example 59

The reaction was carried out under the conditions described in Example 2 except that the catalyst was No. 26 Raney nickel (1.90 g), and the pH was 8.0. The yield of glyphosate was determined to be 78.3%.

Example 60

The reaction of Example 2 was repeated except that the catalyst comprised 5% platinum on activated carbon (0.1 g) and the pH was 8.0. Selectivity to glyphosate was 82.6% at a conversion of 25.2%.

Example 61

The reaction of Example 2 was repeated except that the catalyst utilized was 10% palladium on carbon (0.1 g), and the pH was 5.0. After 18 hours of reaction, the reaction mixture was analyzed. A 96.0% yield of glyphosate was obtained.

Example 62

The reaction conditions of Example 2 were repeated except that the catalyst used was 10% palladium on carbon (0.1 g), and the pH was 7.0. After 14 hours of reaction, the reaction product was analyzed. A 97.7% yield of glyphosate was obtained.

Set forth in Table II below is a summary of the effect of pH on yield for reactions run at room temperature and $60.8 \times 10^5$ $N/m^2$ gauge hydrogen pressure. The plot of these data is set forth in Fig. 1.

TABLE II

| Example No. | pH | Yield (%)* |
|---|---|---|
| 46 | 2.2 | 4 |
| 38 | 3.5 | 35 |
| 61 | 5.0 | 96 |
| 5 | 6.0 | 96.7 |
| 62 | 7.0 | 97.7 |
| 40 | 8.0 | 96 |
| 41 | 9.0 | 100 |
| 42 | 10.0 | 71 |
| 43 | 12.0 | 56 |
| 44 | 13.0 | 32 |

*The yield is defined as the ratio of the amount of glyphosate obtained to the theoretical amount of glyphosate obtainable based on the total initial charge of aminomethylphosphonic acid.

Example 63

Aminomethylphosphonic acid (1.64 g; 0.015 mole) and glyoxylic acid (1.90 g; 0.02 mole) were dissolved

in water (50 mL). The pH of the resulting solution was adjusted to 6.0 by addition of 2.5 N sodium hydroxide. A 20 mL portion of this solution was placed in the anode compartment and a 30 mL portion was placed in the cathode compartment of an electrochemical cell having an Alundum porous alumina cup divider separating anode and cathode compartments. The cathode was a mercury pool (7 $cm^2$) and the anode a platinum screen. Direct current (0.1 amp) at a voltage of 3 v was passed through the cell for 3.13 hours, during which time the temperature of the catholyte and anlyte was maintained at 25°C by external cooling. The pH of the catholyte was maintained at below 9.5 by addition of aqueous hydrochloric acid. After the aforesaid period of reaction, the catholyte was analyzed for glyphosate. This analysis revealed that 0.16g of glyphosate had been produced representing a yield of 17.2%.

Example 64

Aminomethylphosphonic acid was reductively alkylated with glyoxylic acid under the electrochemical conditions of Example 63 except that a graphite rod was substituted for the mercury pool cathode. A 5.6% yield of glyphosate was obtained.

Example 65

Electrochemical reductive alkylation of aminomethylphosphonic acid with glyoxylic acid was carried out in the manner generally described in Example 63 except that a platinum cathode (13$cm^2$) was employed. A 23% yield of glyphosate was obtained.

Example 66

Aminomethylphosphonic acid (1.98 g; 0.018 mole) and glyoxylic acid (1.90 g; 0.02 mole) were dissolved in water (100 mL), and the pH of the resulting solution adjusted to 7.0 by addition of 2.5 N sodium hydroxide. This solution was employed as the catholyte in a divided parallel plate electrochemical cell. The anolyte was a solution of potassium acetate (7.0 g) and water (100 mL).

The cell utilized in electrochemical reduction of this example corresponded generally to that illustrated in Fig. 4. It had a cadmium cathode, carbon anode, and was divided by a perfluorosulfonic acid ion exchange membrane sold under the trade designation "Nafion®" by E. I. duPont de Nemours & Company. Teflon® spacer flow channels (0.25 in) formed the body of the cell. Each cell compartment was fed by a Riton® head pump from a 150 mL reservoir. A current of 0.3 amp (30 mA/$cm^2$) was passed through the cell for 6.75 hours. A 19.3% yield of glyphosate was observed.

Example 67

Glyphosphate was prepared in the manner described in Example 2 except that, prior to adjustment of pH, dimethylammonium chloride (1 equivalent) was added to the reactor charge. The pH was adjusted to 8.0 After the reaction was allowed to run overnight, a 46.1% yield of the dimethylamine salt of N - phosphonomethylglycine was obtained (100% selectivity at 46. 1 % conversion).

Example 68

Aminomethylphosphonic acid (95% strength; 12.0 g; 0.103 mole) and glyoxylic acid (10.8 g; 0.108 mole) were taken as a slurry in water (40 mL). While the slurry was agitated with a magnetic stirrer and cooled with an ice water bath, the pH of the aqueous liquid phase was adjusted to 6.8 by addition of 50% by weight sodium hydroxide solution. The resultant yellow colored solution was transferred to a 300 mL autoclave. Total weight of the solution was 87.9 g. After transfer of the solution to the autoclave, 10% palladium on carbon catalyst (2.10 g) was added to the solution and the reactor pressurized to $6.89 \times 10^6$ N/$m^2$ with hydrogen. The reaction was allowed to proceed overnight at room temperature. Thereafter the catalyst was filtered off and the solution analyzed by HPLC. A quantitative yield of glyphosphate salt (17.4g as the acid equivalent) was found.

The product solution was concentrated and treated with concentrated hydrochloric acid. The sodium chloride that precipitated was removed and the solution reconcentrated. After 3 successive water concentration treatments for removal of excess HCl, a crystalline material was formed. From this crystalline material was isolated 15.2 g of glyphosate for an isolated yield of 87%.

Example 69

Aminomethylphosphonic acid (95% strength; 2.5 g; 0.021 mole) and hydrated sodium polyglyoxylate (83.2% by weight; 3.17 g; 0.024 mole) were dissolved in water (40 mL). The solution was heated to 50°C for 1 hour after which the pH was adjusted to 7.0 by addition of 2.5 normal sodium hydroxide. The neutralized solution was transferred to a 300 mL autoclave, 10% palladium on carbon catalyst (1.0 g) was added, and the reactor was sealed with argon and then pressurized with hydrogen gas to 6.89 x $10^6$ N/$m^2$. After reaction at 27°C for 3 and 3/4 hours, the product was analyzed. A 91.4% yield of glyphosphate salt was found.

Example 70

The conditions of Example 48 were replicated but the cathode potential was held at -1.0 volts vs. the standard calomel electrode reference. Sufficient current was passed to convert 67% of the starting material to glyphosate. Analysis indicated a 94.4% selectivity to glyphosphate salt.

Example 71

Aminomethylphosphonic acid (0.05 mole; 5.5 g) was dissolved in water, and the pH of the resulting solution adjusted to 11 by addition of a 50% by weight sodium hydroxide solution (7.5 g). Thereafter, aliquots of glyoxylic acid and sodium borohydride were alternatively added to the aqueous solution. The total amount of glyoxylic acid added was 0.05 mole (7.4 g), and the total amount of sodium borohydride added was 0.74 g (0.012 mole). Initially, about 1/5 of the total amount of glyoxylic acid was added to the solution, the pH was adjusted to 11 with sodium hydroxide, and about 1/5 of the total amount of sodium borohydride was added at 30°C. This procedure was repeated 4 times until the total amounts of glyoxylic acid and sodium borohydride had been added. After each addition of sodium borohydride, the solution clouded momentarily.

After addition of the aforesaid amounts of glyoxylic acid and sodium borohydride, unreacted aminomethylphosphonic acid remained in the reaction solution. Alternate addition of glyoxylic acid and sodium borohydride with intermediate adjustment of pH to 11 with sodium hydroxide was repeated until an initial 2.5 g glyoxylic acid, 0.26 g sodium borohydride, and 2 g sodium hydroxide had been added to the solution. Asample was then taken from the reaction solution, analyzed by HPLC, and found to contain 1.62 g glyphosate per 100 g of water.

Example 72

Aminomethylphosphonic acid (0.05 mole; 5.5 g) was dissolved in water, and the pH of the resulting solution adjusted to 11.0 by addition of 50% sodium hydroxide solution (10 g). Glyoxylic acid (0.05 mole; 7.4 g total) and sodium borohydride (0.012 mole; 0.47 g total) were added incrementally and alternately over a 5 hour period with the pH of the solution being adjusted by addition of sodium hydroxide solution before each pair of additions of glyoxylic acid and sodium borohydride. A total of 4.0 g 50% sodium hydroxide was used for pH adjustment. Addition of reactants was carried out at room temperature. Upon addition of increments of sodium borohydride a momentary clouding of the reaction solution was observed along with the appearance of small bubbles.

The reaction was monitored by HPLC of material from which water had been stripped. At the conclusion of the addition of the aforesaid amounts of reactants, the stripped reaction mixture was found to contain 21.6% by weight glyphosate. In an effort to complete the reaction, additional increments of glyoxylic acid (14.8 g total), sodium borohydride (0.94 g total), and sodium hydroxide (8.0 g total) were added to the reaction solution. An aliquot of this solution was stripped for analysis by HPLC. The remaining solution (123.7 g) was acidified with hydrochloric acid (17 g) to a pH of 2.0, but no crystallization took place, apparently due to the presence of glycolic acid. Overall, 3 times the stoichiometric amounts of glyoxylic acid and sodium borohydride were used in this example.

Samples taken throughout the reaction were analyzed by nuclear magnetic resonance. The analyses showed an increase of glycolic acid singlet at 3.5 ppm and a decrease of the aminomethylphosphonic acid methylene singlets and a corresponding shift to the glyphosate methylene. Up to the stoichiometric amount of addition, the aminomethylphosphonic acid peaks were half the size of the glyphosate peaks. After twice the stoichiometric amounts of glyoxylic acid had been added, the glyphosate peaks were 5 times greater than the aminomethylphosphonic acid peaks. After acidification only glyphosate peaks were observed along with a new singlet at 3.0 ppm.

Two runs were made according to the protocol of this example. In one, 6.00 g of glyphosate was obtained

(71.0% yield) and in the other, 5.91 g of glyphosate was obtained (69.9% yield).

Sodium chloride was separated from the glyphosate product by treating the reaction mixture with hydrochloric acid and removing insoluble sodium chloride by filtration. The filtrate was stripped to produce a glyphosate hydrochloride which was brown in color. Addition of a small quantity of water formed small white crystals of glyphosate. By this workup, 6.5 g sodium chloride and 1.6 g glyphosate were obtained. The glyphosate was crystallized twice from water and the recrystallized product analyzed by HPLC and found to be 94.8% pure.

## Claims

1. A process for preparing a secondary amine corresponding to the Formula (I)

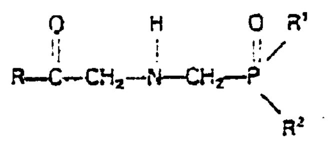

(I)

wherein R is -OH, -OH$^3$ wherein $R^3$ is selected from monovalent hydrocarbon groups containing 1 to 18 carbon atoms, and -OR$^4$ wherein $R^4$ is a herbicidally acceptable salt-forming cation selected from alkali metal cations, alkaline earth metal cations, ammonium, aliphatic ammonium and aliphatic phosphonium; and $R^1$ and $R^2$ are independently selected from -OH and -OR$^4$; the process comprising: condensing a precursor primary amine corresponding to the formula

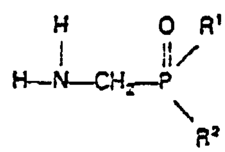

where $R^1$ and $R^2$ are as defined above, in an aqueous reaction medium with a carbonyl compound corresponding to the formula

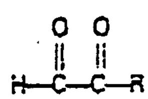

where R is a defined above; and reducing without isolation the condensation product to produce the secondary amine of Formula (I), wherein the condensation and reduction reactions are carried out at a temperature between about 0°C and about 150°C, and wherein the reduction is effected by catalytic hydrogenation, electrochemically or with a chemical reducing agent other than sulfur dioxide.

2. A process as set forth in Claim 1 wherein said condensation and reduction reactions are carried out at a temperature between about 20°C and about 90°C.

3. A process as set forth in either of Claims 1 and 2, wherein the pH of said reaction medium is between about 4.0 and about 11.0 during said condensation and reduction reactions.

4. A process as set forth in Claim 3 wherein said pH is between about 5.0 and about 10.0 during said reactions.

5. A process as set forth in any of Claims 1 to 4 wherein the molar ratio of said carbonyl compound to said precursor amine is between about 1.0 and about 1.2.

6. A process as set forth in any of Claims 1 to 5 wherein said reduction reaction is carried out electrochemically.

7. A process as set forth in any of Claims 1 to 5 wherein said reduction is carried out in the presence of a

reducing agent for said condensation product.

**8.** A process as set forth in Claim 7 wherein said reduction reaction is carried out by catalytic hydrogenation.

**9.** A process as set forth in Claim 8 wherein the hydrogenation catalyst is selected from platinum, palladium, osmium, iridium, rhodium, ruthenium, nickel, cobalt, copper, zinc, and combinations of these metals in the form of the elemental metal or a compound of the metal.

**10.** A process as set forth in Claim 7 wherein said reducing agent comprises an alkali metal borohydride.

**11.** A process as set forth in any of Claims 2 to 10 wherein R, $R^1$, and $R^2$ are OH.

**12.** A process as set forth in any of Claims 2 to 10 wherein R, $R^1$, and $R^2$ are $OR^4$.

**Revendications**

1 - Procédé de préparation d'une amine secondaire répondant à la formule (I)

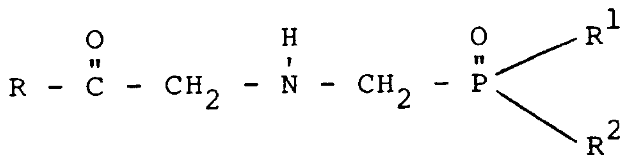

(I)

dans laquelle R est -OH, $-OR^3$, où $R^3$ est choisi parmi des groupes hydrocarbure monovalents en $C_1$ à $C_{18}$, et $-OR^4$, où $R^4$ est un cation formant un sel acceptable comme herbicide choisi parmi des cations de métaux alcalins, des cations de métaux alcalino-terreux, des cations ammonium, ammonium aliphatique et phosphonium aliphatique; et $R^1$ et $R^2$ sont choisis indépendamment parmi -OH et $-OR^4$;

le procédé comprenant :

la condensation d'une amine primaire précurseur répondant à la formule :

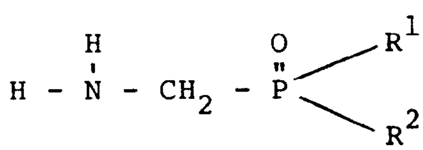

dans laquelle $R^1$ et $R^2$ sont tels que définis ci-dessus, dans un milieu réactionnel aqueux avec un composé carbonylé répondant à la formule :

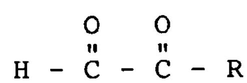

dans laquelle R est tel que défini ci-dessus; et la réduction sans isolement du produit de condensation pour produire l'amine secondaire répondant à la formule (I), dans lequel les réactions de condensation et de réduction sont effectuées à une température comprise entre 0°C et environ 150°C et dans lequel la réduction est effectuée par hydrogénation catalytique, électrochimiquement ou avec un agent réducteur chimique autre que l'anhydride sulfureux.

2 - Procédé selon la revendication 1, dans lequel ces réactions de condensation et de réduction sont effectuées à une température comprise entre environ 20°C et environ 90°C.

3 - Procédé selon l'une des revendications 1 et 2, dans lequel le pH de ce milieu réactionnel est compris entre environ 4,0 et environ 11,0 au cours de ces réactions de condensation et de réduction.

4 - Procédé selon la revendication 3, dans lequel ce pH est compris entre environ 5,0 et environ 10,0 au cours de ces réactions.

5 - Procédé selon l'une quelconque des revendications 1 à 4, dans lequel le rapport molaire de ce composé carbonylé à cette amine précurseur est compris entre environ 1,0 et environ 1,2.

6 - Procédé selon l'une quelconque des revendications 1 à 5, dans lequel cette réaction de réduction est effectuée électrochimiquement.

7 - Procédé selon l'une quelconque des revendications 1 à 5, dans lequel cette réaction de réduction est effectuée en présence d'un agent réducteur pour ce produit de condensation.

8 - Procédé selon la revendication 7, dans lequel cette réaction de réduction est effectuée par hydrogénation catalytique.

9 - Procédé selon la revendication 8, dans lequel le catalyseur d'hydrogénation est choisi parmi le platine, le palladium, l'osmium, l'iridium, le rhodium, le ruthénium, le nickel, le cobalt, le cuivre, le zinc et des associations de ces métaux sous la forme de métal élémentaire ou d'un composé du métal.

10 - Procédé selon la revendication 7, dans lequel cet agent réducteur comprend un borohydrure de métal alcalin.

11 - Procédé selon l'une quelconque des revendications 2 à 10, dans lequel R, $R^1$ et $R^2$ sont OH.

12 - Procédé selon l'une quelconque des revendications 2 à 10, dans lequel R, $R^1$ et $R^2$ sont $OR^4$.

## Patentansprüche

1. Verfahren zur Herstellung eines sekundären Amins entsprechend der Formel (I)

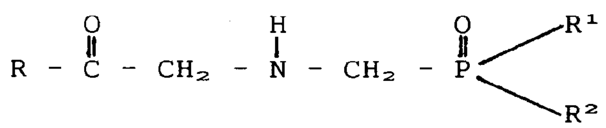

(I) ,

worin R -OH, $-OR^3$, worin $R^3$ ausgewählt ist aus einwertigen Kohlenwasserstoffgruppen, welche 1 bis 18 Kohlenstoffatome enthalten, und $-OR^4$, worin $R^4$ ein herbizidakzeptables salzbildendes Kation, ausgewählt aus Alkalimetallkationen, Erdalkalimetallkationen, Ammonium, aliphatischem Ammonium und aliphatischem Phosphonium ist; und $R^1$ und $R^2$ unabhängig voneinander aus -OH und $-OR^4$ ausgewählt sind; welches Verfahren umfaßt:

Kondensieren eines primären Vorläuferamins entsprechend der Formel

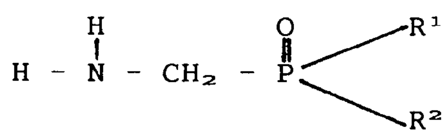

,

worin $R^1$ und $R^2$ die obige Bedeutung haben, in einem wässerigen Reaktionsmedium mit einer Carbonylverbindung entsprechend der Formel

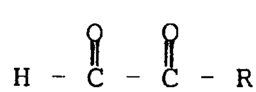

,

worin R die obige bedeutung hat; und Reduktion ohne Isolierung des Kondensationsproduktes zur Herstellung des sekundären Amins der Formel (I), wobei die Kondensations- und Reduktionsreaktionen bei einer Temperatur zwischen etwa 0°C und etwa 150°C durchgeführt werden und wobei die Reduktion durch katalytische Hydrierung, elektrochemisch oder mit einem von Schwefeldioxid verschiedenen chemischen Reduktionsmittel durchgeführt wird.

2. Verfahren nach Anspruch 1,wobei die Kondensations- und Reduktionsreaktionen bei einer Temperatur zwischen etwa 20°C und etwa 90°C durchgeführt werden.

3. Verfahren nach Anspruch 1 und 2, worin der pH-Wert des Reaktionsmediums während der Kondensations- und Reduktionsreaktionen zwischen etwa 4,0 und etwa 11,0 liegt.

4. Verfahren nach Anspruch 3, worin der pH-Wert während der Reaktionen zwischen etwa 5,0 und etwa 10,0 liegt.

5. Verfahren nach einem der Ansprüche 1 bis 4, worin das Molverhältnis der Carbonylverbindung zum Vorläuferamin zwischen etwa 1,0 und etwa 1,2 liegt.

6. Verfahren nach einem der Ansprüche 1 bis 5, worin die Reduktionsreaktion elektrochemisch durchgeführt wird.

7. Verfahren nach einem der Ansprüche 1 bis 5, worin die Reduktionsreaktion in Anwesenheit eines Reduktionsmittels für das Kondensationsprodukt durchgeführt wird.

8. Verfahren nach Anspruch 7, worin die Reduktionsreaktion durch katalytische Hydrierung durchgeführt wird.

9. Verfahren nach Anspruch 8, worin der Hydrierungskatalysator aus Platin, Palladium, Osmium, Iridium, Rhodium, Ruthenium, Nickel, Kobalt, Kupfer, Zink und Kombinationen dieser Metalle in Form der elementaren Metalle oder einer Verbindung der Metalle durchgeführt wird.

10. Verfahren nach Anspruch 7, worin das Reduktionsmittel ein Alkalimetallborhydrid ist.

11. Verfahren nach einem der Ansprüche 2 bis 10, worin R, $R^1$ und $R^2$ OH bedeuten.

12. Verfahren nach einem der Ansprüche 2 bis 10, worin R, $R^1$ und $R^2$ $OR^4$ bedeuten.

FIG. 1

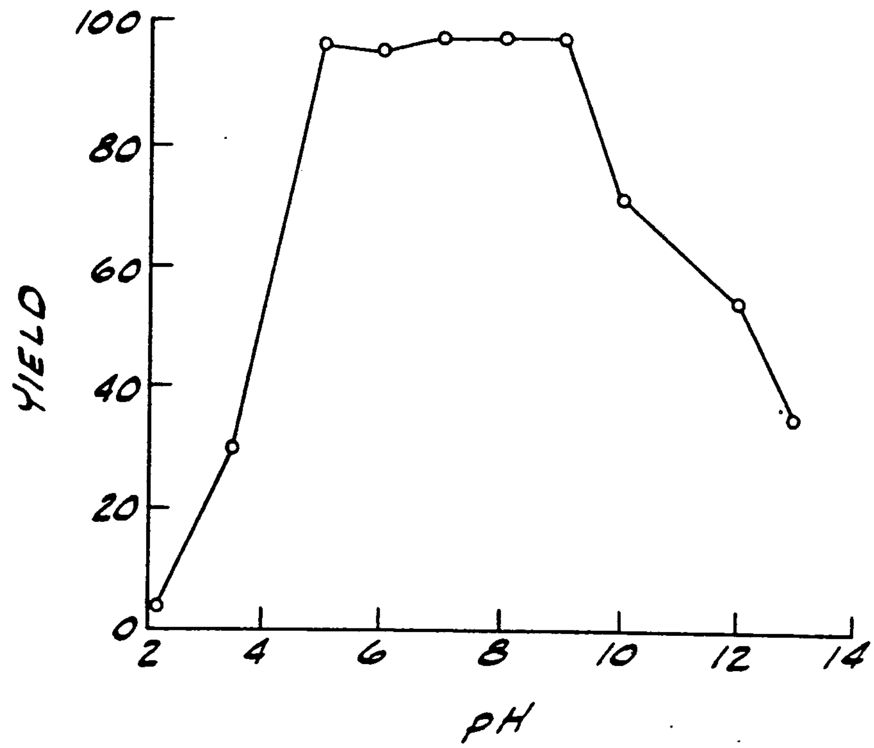
100
80
60
40
20
0
YIELD
2
4
6
8
10
12
14
pH

FIG. 2

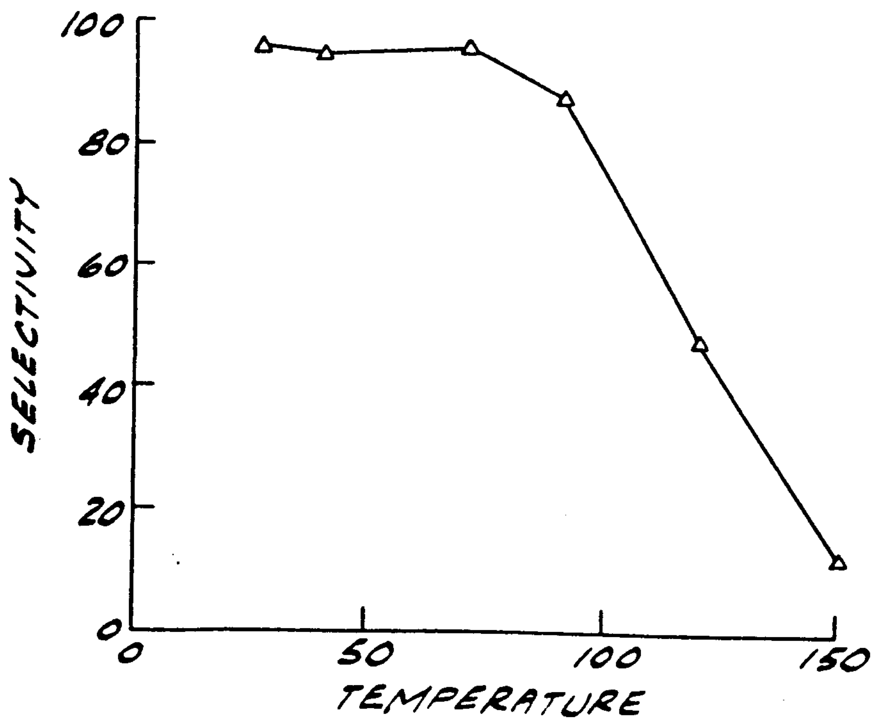
100
80
60
40
20
0
SELECTIVITY
0
50
100
150
TEMPERATURE

FIG. 3

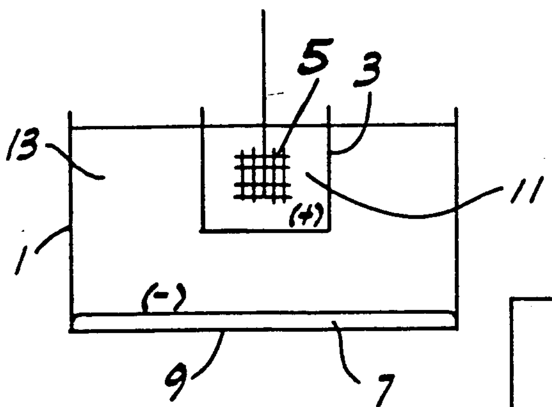


FIG. 4